# EUROPEAN PATENT APPLICATION

(11) **EP 2 276 103 A1**
(43) Date of publication of application: **19.01.2011**
(21) Application number: 09738743.5
(22) Date of filing: 23.04.2009
(51) Int. Cl.: H01M 14/00, H01L 31/04

(54) **DYE-SENSITIZED PHOTOELECTRIC CONVERSION ELEMENT**

(30) Priority: 02.05.2008 JP 2008120570
(71) Applicant: Peccell Technologies Inc, Yokohama-shi Kanagawa 225-8502 (JP); Gakko Houjin Toin Gakuen, Aoba-ku Yokohama-shi Kanagawa 225-8502 (JP)
(72) Inventor: MIYASAKA, Tsutomu, Machida-shi Tokyo 194-0041 (JP); IKEGAMI, Masashi, Yokohama-shi Kanagawa 227-0045 (JP)
(74) Representative: Albrecht, Thomas
(86) International application number: PCT/JP2009/058093
(87) International publication number: WO 2009/133806

(57) **Abstract**

A dye-sensitized photoelectric conversion device of the present invention has high energy conversion efficiency, even if the amount of iodine added into the electrolyte solution is significantly reduced. The dye-sensitized photoelectric conversion device has a porous photoelectrode layer comprising dye-sensitized semiconductor particles, an electrolyte solution layer, and a counter electrode layer in order. The electrolyte solution layer comprises an electrolyte solution containing 0.05 to 5 M of an aliphatic quarternary ammonium ion, 0.05 to 5 M of an imidazolium ion, and 0.1 to 10 M of iodide ion. The ions are dissolved in an organic solvent. Consequently, the amount of iodine added into the electrolyte solution can be reduced significantly.

## Description

### [Field of the invention]

The present invention relates to a photoelectric conversion device of a dye-sensitized type.

### [Background of the invention]

An intensive research has recently been conducted into a solar cell of a solid p-n junction type, which is one of photoelectric conversion devices for converting solar energy into electric power. The solar cell of the solid junction type uses silicon crystals, a thin amorphous silicon film, or a thin multi-layered film comprising a semiconductor of a non-silicon compound.

The solar cell of the solid junction type has been prepared under high-temperature or vacuum conditions. Accordingly, the solar cell of the solid junction type has a defect in a high cost of a plant. Therefore, the energy payback time is relatively long.

A solar cell of an organic type has been developed with the anticipation of the coming generation of the solar cell. The organic solar cell can be prepared under conditions of low temperature at a low cost. A solar cell of a dye-sensitized type, one of the organic solar batteries can be prepared in the ordinary atmosphere at an even lower cost. Accordingly, the dye-sensitized solar cell is particularly evaluated from the viewpoint of mass production. US Patent No. 4,927,721 (Patent Document 1) proposes a photoelectric conversion method of high efficiency using a dye-sensitized porous semiconductor layer in a dye-sensitized solar cell.

The dye-sensitized solar cell is a wet-type solar cell replacing solid (semiconductor) to solid (semiconductor) junction in a solid junction solar cell with solid (semiconductor) to liquid (electrolyte) junction. Its energy conversion efficiency has already reached 11%. Therefore, the dye-sensitized solar cell is a hopeful source of electric power.

The electrolyte of the dye-sensitized solar cell usually is a solution of a redox couple and an electrolyte, which are dissolved in an organic solvent.

The organic solvent usually is a non-protonic polar substance (e.g., carbonate, ether, lactone, nitrile, sulfoxide). As the redox couple, iodine and iodide, bromine and bromide, ferrocyanide and ferricyanide, and ferrocene and ferricinium ion have been proposed. However, the practically used redox couple is limited to only the combination of iodine (triiodide ion in the solution) and iodide (iodide ion in the solution) from the viewpoint of high energy conversion efficiency. A representative electrolyte is a salt of a quarternary ammonium ion (including cyclic ions such as pyridinium ion and imidazolium ion) with a counter ion (usually iodide ion).

The redox couple has been essential in the principal of the dye-sensitized solar cell. It is difficult to obtain sufficiently high energy conversion efficiency with a redox couple other than the combination of iodine and iodide.

Japanese Patent Publication No. 2005-235725 (Patent Document 2) proposes a module comprising two or more dye-sensitized solar cells, which are different from each other with respect to one of the elements (claim 1). Examples of the elements include a difference in the concentration of iodine in electrolyte (claims 6 and 7). It is reported in preliminary experiments about iodine concentrations that the iodide concentration is changed from 0.01 M to 0.05 M in the case that solid imidazolium salt is used with 4-t-butylpyridine, or in the case that liquid imidazolium salt is used with 4-t-butylpyridine (paragraphs 0039 to 0050). In Examples, a solar cell of a lower iodine concentration uses iodine in a concentration of 0.02 M or 0.03 M, and a solar cell of a higher iodine concentration uses iodine in a concentration of 0.05 M (paragraph 0057, Table 4).

Japanese Patent Publication No. 2007-200708 (Patent Document 3) reports experimental examples in which the amount of iodine is changed from 0 M to 0.2 M (paragraph 0034, Table 1). The solar cell cannot function at all when iodine is not added. The amount of iodine should be 0.04 M to 0.2 M.

### [Prior art documents]

Patent Document 1: US Patent No. 4,927,721
Patent Document 2: Japanese Patent Publication No. 2005-235725 (claims 1, 6, 7, paragraphs 0039-0050, 0057)
Patent Document 3: Japanese Patent Publication No. 2007-200708 (paragraph 0034)

### [Summary of the invention]

### [Problems to be solved by the invention]

A dye-sensitized solar cell should use a redox couple comprising iodine and iodide in an electrolyte solution to obtain sufficiently high energy conversion efficiency. However, the used iodine forms triiodide ion. The electrolyte solution is colored with the triiodide ion (usually in yellow to brown). The colored solution absorbs light acting as a filter to cause lower energy conversion efficiency. Further, iodine causes oxidation erosion reaction, which degrades the solar cell. If the cell is packaged in a wrapping bag made of a transparent plastic film, iodine may cause elution from the bag.

An object of the present invention is to provide a dye-sensitized photoelectric conversion device having high energy conversion efficiency, even if the amount of iodine added into the electrolyte solution is significantly reduced.

Another object of the invention is to provide a dye-sensitized photoelectric conversion device improved in durability.

### [Means for solving the problems]

The present invention provides a dye-sensitized photoelectric conversion device having a porous photoelectrode layer comprising dye-sensitized semiconductor particles, an electrolyte solution layer, and a counter electrode layer in order, wherein the electrolyte solution layer comprises an electrolyte solution containing 0.05 to 5 M of an aliphatic quarternary ammonium ion represented by the following formula (I), 0.05 to 5 M of an imidazolium ion represented by the following formula (II), and 0.1 to 10 M of iodide ion which are dissolved in an organic solvent.

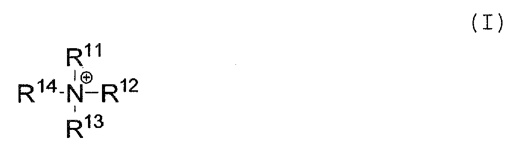

In the formula (I), each of R¹¹, R¹², R¹³, and R¹⁴ independently is an aliphatic group having 1 to 20 carbon atoms.

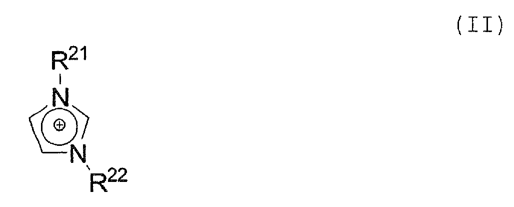

In the formula (II), each of R²¹ and R²² independently is an aliphatic group having 1 to 20 carbon atoms.

The present invention can be conducted according to the following embodiments (1) to (14).
(1) A ratio of triiodide ion (I₃⁻) to iodide ion (I⁻) in the electrolyte solution is less than 1 mole percent.
(2) The organic solvent is selected from the group consisting of a five-membered cyclic carbonate, a five-membered cyclic ester, an aliphatic nitrile, a linear aliphatic ether, and a cyclic aliphatic ether.
(3) The organic solvent contains a five-membered cyclic carbonate represented by the following formula (III).

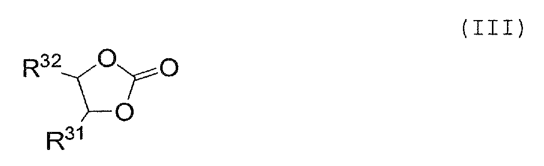

In the formula (III), each of R³¹ and R³² independently is hydrogen or an aliphatic group having 1 to 20 carbon atoms.
(4) Each of R¹¹, R¹², R¹³, and R¹⁴ in the aliphatic quarternary ammonium ion of the formula (I) independently is an alkyl group having 1 to 20 carbon atoms.
(5) Each of R²¹ and R²² in the imidazolium ion of the formula (II) independently is an alkyl group or an alkyl group substituted with an alkoxy group represented by the following formula (II-R):

   - (CₙH₂ₙO-)ₘ-R²³ (II-R)

In the formula (II-R), R²³ is an alkyl group having 1 to 6 carbon atoms, n is 2 or 3, and m is an integer of 0 to 6.
(6) 0.01 to 1 M of a benzimidazole compound represented by the following formula (IV) is further dissolved in the organic solvent of the electrolyte solution.

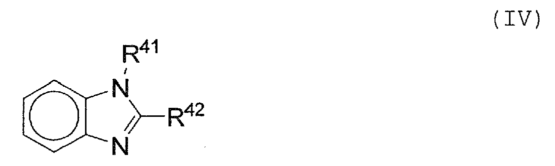

In the formula (IV), R⁴¹ is an aliphatic group having 1 to 20 carbon atoms, and R⁴² is hydrogen or an aliphatic group having 1 to 6 carbon atoms.
(7) R⁴¹ is an alkyl group having 1 to 12 carbon atoms, an aralkyl group having 7 to 12 carbon atoms, or an alkoxyalkyl group having 2 to 12 carbon atom, and R⁴² is hydrogen or an alkyl group having 1 to 3 carbon atoms in the benzimidazole compound of the formula (IV).
(8) 0.01 to 1 M of thiocyanate ion or isothiocyanate ion is further dissolved in the organic solvent of the electrolyte solution.
(9) 0.01 to 1 M of a guanidium ion represented by the following formula (V) is further dissolved in the organic solvent of the electrolyte solution.

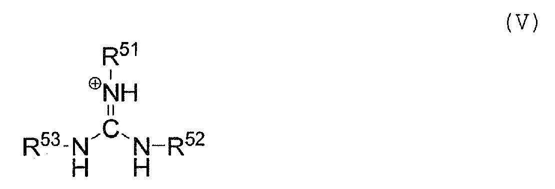

In the formula (V), R⁵¹, R⁵², and R⁵³ independently is hydrogen or an aliphatic group having 1 to 20 carbon atoms.
(10) The guanidium ion of the formula (V) has no substituent.
(11) The photoelectrode layer comprises a substrate and a conductive metal layer provided on the substrate on the side facing the electrolyte solution layer.
(12) The counter electrode layer comprises a substrate and a conductive metal layer provided on the substrate on the side facing the electrolyte solution layer.
(13) An anti-reflection layer is formed on a surface of the substrate of the photoelectrode layer or the counter electrode layer, said surface being opposite to the side facing the electrolyte solution layer.
(14) The device is packaged in a wrapping bag made of a transparent plastic film.

In the present specification, the term "aliphatic group" means an alkyl group, a substituted alkyl group, an alkenyl group, a substituted alkenyl group, an alkynyl group, a substituted alkynyl group, an aralkyl group, or a substituted aralkyl group. The alkyl group, the substituted alkyl group, the alkenyl group, the substituted alkenyl group, the alkynyl group, and the substituted alkynyl group are preferred, the alkyl group, the substituted alkyl group, the alkenyl group, and the substituted alkenyl group are more preferred, and the alkyl group and the substituted alkyl group are most preferred.

Examples of the substituents of the substituted alkyl group, the substituted alkenyl group, the substituted alkynyl group, and the substituted aralkyl group include -O-R, -CO-R, -N(-R)₂, -O-CO-R, -CO-O-R, -NH-CO-R, and -CON(-R)₂. R is hydrogen or an aliphatic group. Two R contained in -N(-R)₂ or -CO-N(-R)₂ can be different from each other. The aliphatic group is defined above. The substituent preferably is -O-R, -CO-R, -O-CO-R, or -CO-O-R. Most preferred is -O-R.

The particularly preferred substituent of the substituted alkyl group is represented by the formula of - (O-L)ₙ-O-R. L is a divalent aliphatic group (preferably is alkylene, more preferably is alkylene having 1 to 3 carbon atoms, and most preferably is ethylene). In the formula, n is an integer of 0 to 10. R is hydrogen or an aliphatic group (preferably is alkyl, more preferably is alkyl having 1 to 3 carbon atoms, and most preferably is methyl).

### [Effect of the invention]

The present inventors have studied various compositions of the electrolyte solutions, and surprisingly found a specific composition giving high energy conversion efficiency, even if the amount of iodine added into the electrolyte solution is significantly reduced.

The specific composition is that an aliphatic quarternary ammonium ion, an imidazolium ion, and iodide ion are dissolved in an organic solvent. In the case that iodide ion is dissolved in the electrolytic solution, it has been considered that triiodide ion (which forms the redox couple with iodine ion) should be present in the electrolytic solution (in other words, iodine should be added to the electrolytic solution). However, the high energy conversion efficiency can be obtained even if the amount of iodine is significantly reduced, only in the case that the above-mentioned specific electrolytes are used in combination.

According to study of the inventors, it has been found that electron is transferred by an electron exchanging reaction between iodide ions (I⁻) in an electrolyte solution layer, even in the case that a redox couple is not formed (triiodide ion is not present). Electron is transferred only in the case the specific combination of the specific electrolytes are used in combination, which is different from the case that a redox couple is present. The specific combination of the electrolytes accelerates the electron transfer between iodide ions.

In the electrolyte solution having a composition of the present invention, the amount of iodine added into the solution can significantly be reduced. The color of the electrolyte solution dyed with triiodide ion can also be reduced to improve transparency of the solution. Therefore, the energy conversion efficiency is improved with the transparent solution.

A metal that is corroded with iodine could not be used in a conductive layer of a photoelectrode layer or a counter electrode layer, since iodine is strongly corrosive. The amount of iodine added into the electrolyte solution can significantly be reduced according to the invention to use a metal as the conductive layer of the photoelectrode or counter electrode layer. The metal layer has advantages of low resistance and less voltage loss.

### [Brief description of the drawings]

Fig. 1 is a sectional view illustrating a structural example of the dye-sensitized photoelectric conversion device.
Fig. 2 is absorption spectra of an electrolyte solution containing no iodine and a solution containing iodine.
Fig. 3 is a chart showing current-voltage characteristic of the dye-sensitized photoelectric conversion device.

### [Embodiments of the invention]

### [Electrolyte solution]

The present invention is characterized in that the electrolyte solution layer comprises a specific electrolyte solution. The solution contains 0.05 to 5 M of an aliphatic quarternary ammonium ion represented by the above-mentioned formula (I), 0.05 to 5 M of an imidazolium ion represented by the above-mentioned formula (II), and 0.1 to 10 M of iodide ion (I⁻), which are dissolved in an organic solvent.

It is preferred that the electrolyte solution of the present invention substantially does not contain triiodide ion (I₃⁻).

A ratio of triiodide ion to iodide ion in the electrolyte solution preferably is less than 1 mole percent, more preferably is less than 0.1 mole percent, further preferably is less than 0.01 mole percent, and most preferably is less than 0.001 mole percent. The amount of the triiodide ion can be such a level that the ion is not detectable with a conventional detector.

In preparation of the electrolyte solution, a ratio of iodine to iodide ion can be reduced to the same ratio of the above-mentioned ratio (mole percent) of triiodide ion.

The organic solvent preferably is a non-protonic polar substance. Examples of the organic solvents include a five-membered cyclic carbonate, a five-membered cyclic ester, an aliphatic nitrile, a linear aliphatic ether, and a cyclic aliphatic ether.

The five-membered cyclic carbonate is preferably represented by the following formula (III).

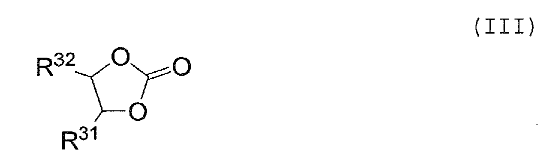

In the formula (III), each of R³¹ and R³² independently is hydrogen or an aliphatic group having 1 to 20 carbon atoms. The aliphatic group preferably is an alkyl group. The aliphatic group preferably has 1 to 12 carbon atoms, more preferably has 1 to 6 carbon atoms, and most preferably has 1 to 3 carbon atoms.

Examples of the five-membered cyclic carbonate include ethylene carbonate and propylene carbonate.

The five-membered cyclic ester is preferably represented by the following formula (VI).

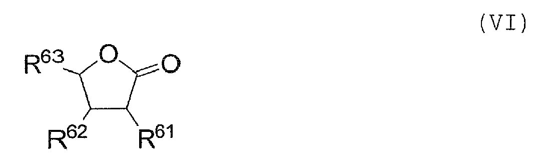

In the formula (VI), each of R⁶¹, R⁶², and R⁶³ independently is hydrogen or an aliphatic group having 1 to 20 carbon atoms. The aliphatic group preferably is an alkyl group. The aliphatic group preferably has 1 to 12 carbon atoms, more preferably has 1 to 6 carbon atoms, and most preferably has 1 to 3 carbon atoms.

Examples of the five-membered cyclic carbonate (y-lactone) include γ-butyrolactone.

The aliphatic nitrile is preferably represented by the following formula (VII).

R⁷¹-C≡N (VII)

In the formula (VII), R⁷¹ is an aliphatic group having 1 to 20 carbon atoms. The aliphatic group preferably is an alkyl group or a substituted alkyl group (more preferably is an alkyl group substituted with an alkoxy group). The aliphatic group preferably has 1 to 12 carbon atoms, more preferably has 1 to 6 carbon atoms, and most preferably has 1 to 3 carbon atoms.

Examples of the aliphatic nitrile include 3-methoxy-propio(no)nitrile.

The linear aliphatic ether is preferably represented by the following formula (VIII).

R⁸¹-O-R⁸² (VIII)

In the formula (VIII) , each of R⁸¹ and R⁸² independently is an aliphatic group having 1 to 20 carbon atoms. The aliphatic group preferably is an alkyl group or a substituted alkyl group (more preferably is an alkyl group substituted with an alkoxy group). The aliphatic group preferably has 1 to 12 carbon atoms, more preferably has 1 to 6 carbon atoms, and most preferably has 1 to 3 carbon atoms.

Examples of the linear aliphatic ether include dimethoxyethane.

The cyclic aliphatic ether is preferably represented by the following formula (IX).

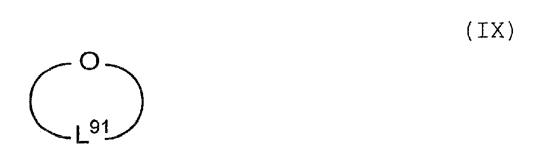

In the formula (IX), L⁹¹ is a divalent aliphatic group having 1 to 20 carbon atoms in which oxygen atom can intervene. L⁹¹ preferably is an alkylene group or a combination of an alkylene group and oxygen atom (e.g., - alkylene-oxygen-alkylene-). The alkylene group preferably has 1 to 12 carbon atoms, more preferably has 1 to 6 carbon atoms, and most preferably has 1 to 4 carbon atoms.

Examples of the cyclic aliphatic ether include tetrahydrofuran and dioxane.

Two or more organic solvents can be used in combination. For example, a five-membered cyclic carbonate can be used in combination with another organic solvent (e.g., a cyclic ester, an aliphatic nitrile, a linear aliphatic ether, a cyclic aliphatic ether). The combination of two or more solvents has an effect of adjusting viscosity of the solvent (to improve dispersion of electrolyte).

The organic solvent can also comprise a specific solvent (e.g., a five-membered cyclic carbonate) as a main component. In the case that a specific solvent is the main component, the amount of the main component (solvent) contained in the total solvent is preferably adjusted. The amount preferably is not less than 50 weight percent, more preferably is not less than 80 weight percent, further preferably is not less than 90 weight percent, furthermore preferably is not less than 95 weight percent, and most preferably is not less than 98 weight percent.

In the electrolyte solution, 0.05 to 5 M of an aliphatic quarternary ammonium ion represented by the following formula (I) is dissolved. The concentration of the aliphatic quarternary ammonium ion in the electrolyte solution preferably is in the range of 0.1 to 2 M, and more preferably is in the range of 0.2 to 1 M.

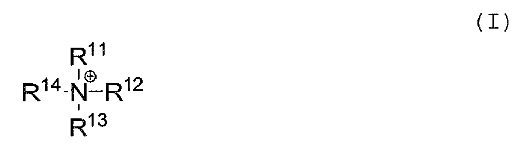

In the formula (I) , each of R¹¹, R¹², R¹³, and R¹⁴ independently is an aliphatic group having 1 to 20 carbon atoms. The aliphatic group preferably has 1 to 12 carbon atoms, more preferably has 2 to 8 carbon atoms, and most preferably has 3 to 6 carbon atoms.

Examples of the aliphatic quarternary ammonium ion are shown below. R¹¹, R¹², R¹³, and R¹⁴ correspond to the definitions in the formula (I).

### (I-1) Tetramethylammonium (R¹¹ to R¹⁴: methyl)

### (I-2) Tetraethylammonium (R¹¹ to R¹⁴: ethyl)

### (I-3) Tetrapropylammonium (R¹¹ to R¹⁴: propyl)

### (I-4) Tetrabutylammonium (R¹¹ to R¹⁴: butyl)

### (I-5) Tetrapentylammonium (R¹¹ to R¹⁴: pentyl)

### (I-6) Tetrahexylammonium (R¹¹ to R¹⁴: hexyl)

In preparation of the electrolyte solution, the aliphatic quarternary ammonium ion is preferably added in the form of a salt. The counter ion of the salt preferably is iodide ion or isothiocyanate ion, and more preferably is iodide ion. The counter ion is described later.

In the electrolyte solution, 0.05 to 5 M of an imidazolium ion represented by the following formula (II) is dissolved. The concentration of the imidazolium ion in the electrolyte solution preferably is in the range of 0.1 to 2 M, and more preferably is in the range of 0.2 to 1 M.

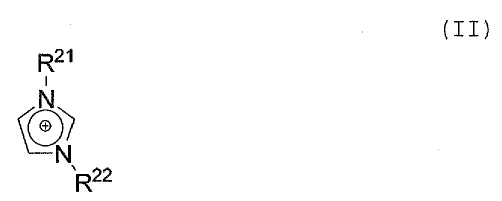

In the formula (II), each of R²¹ and R²² independently is an aliphatic group having 1 to 20 carbon atoms. The aliphatic group preferably has 1 to 15 carbon atoms, more preferably has 1 to 12 carbon atoms, and most preferably has 1 to 10 carbon atoms.

The imidazolium ion is more preferably represented by the following formula (II-A).

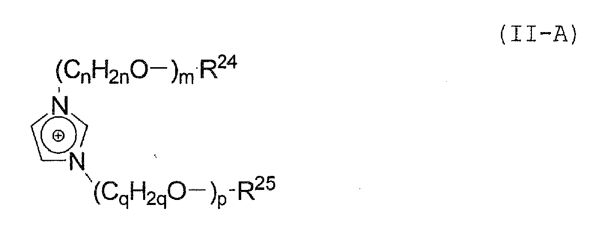

In the formula (II-A), each of each of R²⁴ and R²⁵ independently is an alkyl group having 1 to 6 carbon atoms, each of n and q independently is 2 or 3, and each of m and p independently is an integer of 0 to 6.

Examples of the imidazolium ion are shown below. R²¹ and R²² correspond to the definitions in the formula (II).
(II-1) 1-Butyl-3-methylimidazolium (R²¹: butyl, R²²: methyl)
(II-2) 1-Methyl-3-propylimidazolium (R²¹: methyl, R²² propyl)
(II-3) 1,3-Di(2-(2-methoxyethoxy)ethyl)imidazolium (R²¹, R²²: 2-(2-methoxyethoxy)ethyl)
(II-4) 1-(2-(2-(2-methoxyethoxy)ethoxy)ethyl)-3-(2-(2-methoxyethoxy)ethyl)imidazolium (R²¹: 2-(2-(2-methoxyethoxy)ethoxy)ethyl, R²²: 2-(2-methoxyethoxy)ethyl)
(II-5) 1,3-Di(2-(2-(2-methoxyethoxy)ethoxy)ethyl)-imidazolium (R²¹, R²²: 2-(2-(2-methoxyethoxy)ethoxy)ethyl)
(II-6) 1,3-Di(2-(2-(2-(2-methoxyethoxy)ethoxy)ethoxy)-ethyl)imidazolium (R²¹, R²²: 2-(2-(2-(2-methoxyethoxy)-ethoxy)ethoxy)ethyl)

In preparation of the electrolyte solution, the imidazolium ion is preferably added in the form of a salt. The counter ion of the salt preferably is iodide ion or isothiocyanate ion, and more preferably is iodide ion. The counter ion is described later.

In the electrolyte solution, 0.1 to 10 M of iodide ion (I⁻) is dissolved. In preparation of the electrolyte solution, the iodide ion can be added in the form of a salt as a counter ion of the aliphatic quarternary ammonium ion and the imidazolium ion. In the case that the electrolyte solution does not contain a cation other than the aliphatic quarternary ammonium ion and the imidazolium ion, the amount (mole concentration) of the iodide ion preferably corresponds to the total amount (mole concentration) of the aliphatic quarternary ammonium ion and the imidazolium ion.

The concentration of the iodide ion in the electrolyte solution preferably is in the range of 0.2 to 5 M, and more preferably is in the range of 0.5 to 2 M.

The electrolyte solution can contain other components. Examples of the other components include a benzimidazole compound represented by the below-described formula (IV), (iso)thiocyanate ion, a guanidium ion represented by the below-described formula (V), and lithium ion.

In the case that the benzimidazole compound represented by the following formula (IV) is added to the electrolyte solution, the concentration of the benzimidazole compound in the electrolyte solution is preferably adjusted. The concentration preferably is in the range of 0.01 to 1 M, more preferably is in the range of 0.02 to 0.5 M, and most preferably is in the range of 0.05 to 0.2 M.

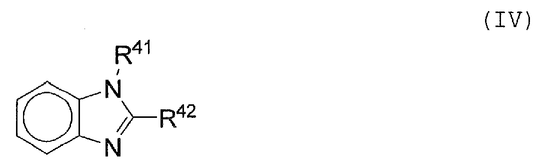

In the formula (IV), R⁴¹ is an aliphatic group having 1 to 20 carbon atoms, and R⁴² is hydrogen or an aliphatic group having 1 to 6 carbon atoms. The aliphatic group of R⁴¹ preferably has 1 to 12 carbon atoms, more preferably has 1 to 6 carbon atoms, and most preferably has 1 to 3 carbon atoms. R⁴² preferably is hydrogen or an aliphatic group having 1 to 3 carbon atoms.

R⁴¹ more preferably is an alkyl group having 1 to 12 carbon atoms, an aralkyl group having 7 to 12 carbon atoms, or an alkoxyalkyl group having 2 to 12 carbon atoms. R⁴² more preferably is hydrogen or an alkyl group having 1 to 3 carbon atoms.

Examples of the benzimidazole compound are shown below. R⁴¹ and R⁴² correspond to the definitions in the formula (IV).
(IV-1) N-Methylbenzimidazole (R⁴¹: methyl, R⁴² : hydrogen)
(IV-2) N-Ethylbenzimidazole (R⁴¹: ethyl, R⁴²: hydrogen)
(IV-3) 1,2-Dimethylbenzimidazole (R⁴¹, R⁴²: methyl)
(IV-4) N-Propylbenzimidazole (R⁴¹: propyl, R⁴² : hydrogen)
(IV-5) N-Butylbenzimidazole (R⁴¹: butyl, R ⁴²: hydrogen)
(IV-6) N-Hexylbenzimidazole (R⁴¹: hexyl, R⁴²: hydrogen)
(IV-7) N-Pentylbenzimidazole (R⁴¹: pentyl, R⁴² : hydrogen)
(IV-8) N-Isopropylbenzimidazole (R⁴¹: isopropyl, R⁴²: hydrogen)
(IV-9) N-Isobutylbenzimidazole (R⁴¹: isobutyl, R⁴²: hydrogen)
(IV-10) N-Benzylbenzimidazole (R⁴¹: benzyl, R⁴²: hydrogen)
(IV-11) N-(2-Methoxyethyl)benzimidazole (R⁴¹: 2-methoxyethyl, R⁴²: hydrogen)
(IV-12) N-(3-Methylbutyl)benzimidazole (R⁴¹: 3-methylbutyl, R⁴²: hydrogen)
(IV-13) 1-Butyl-2-methylbenzimidazole (R⁴¹: butyl, R⁴²: methyl)
(IV-14) N-(2-Ethoxyethyl)benzimidazole (R⁴¹: 2-ethoxyethyl, R⁴²: hydrogen)
(IV-15) N-(2-Isopropoxyethyl)benzimidazole (R⁴¹: 2-isopropoxyethyl, R⁴²: hydrogen)

In the case that thiocyanate ion (S⁻-C≡N) or isothiocyanate ion (N⁻=C=S) is added to the electrolyte solution, the total concentration of the thiocyanate ion and the isothiocyanate ion in the electrolyte solution is preferably adjusted. The total concentration preferably is in the range of 0.01 to 1 M, more preferably is in the range of 0.02 to 0.5 M, and most preferably is in the range of 0.05 to 0.2 M.

In preparation of the electrolyte solution, the (iso)thiocyanate ion is preferably added in the form of a salt. The counter ion of the salt preferably is the below-described guanidium ion or lithium ion, and more preferably is the guanidium ion.

In the case that the guanidium ion represented by the following formula (V) is added to the electrolyte solution, the concentration of the guanidium ion in the electrolyte solution is preferably adjusted. The concentration preferably is in the range of 0.01 to 1 M, more preferably is in the range of 0.02 to 0.5 M, and most preferably is in the range of 0.05 to 0.2 M.

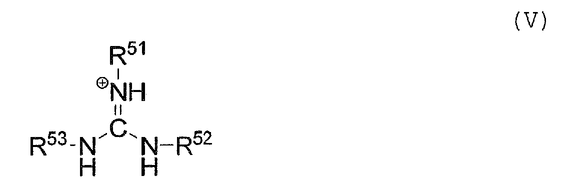

In the formula (V), R⁵¹, R⁵², and R⁵³ independently is hydrogen or an aliphatic group having 1 to 20 carbon atoms. The aliphatic group preferably has 1 to 12 carbon atoms, more preferably has 1 to 6 carbon atoms, and most preferably has 1 to 3 carbon atoms.

Hydrogen is preferred to the aliphatic group. Namely, the guanidium ion preferably has no substituent.

In preparation of the electrolyte solution, the guanidium ion is preferably added in the form of a salt. The counter ion of the salt preferably is iodide ion or

(iso)thiocyanate ion, and more preferably is (iso)thiocyanate ion.

In the case that lithium ion is added to the electrolyte solution, the concentration of the lithium ion in the electrolyte solution preferably is in the range of 0.01 to 1 M, more preferably is in the range of 0.02 to 0.5 M, and most preferably is in the range of 0.05 to 0.2 M.

In preparation of the electrolyte solution, the lithium ion is preferably added in the form of a salt. The counter ion of the salt preferably is iodide ion or (iso)thiocyanate ion, and more preferably is iodide ion.

### [Structure of dye-sensitized photoelectric conversion device]

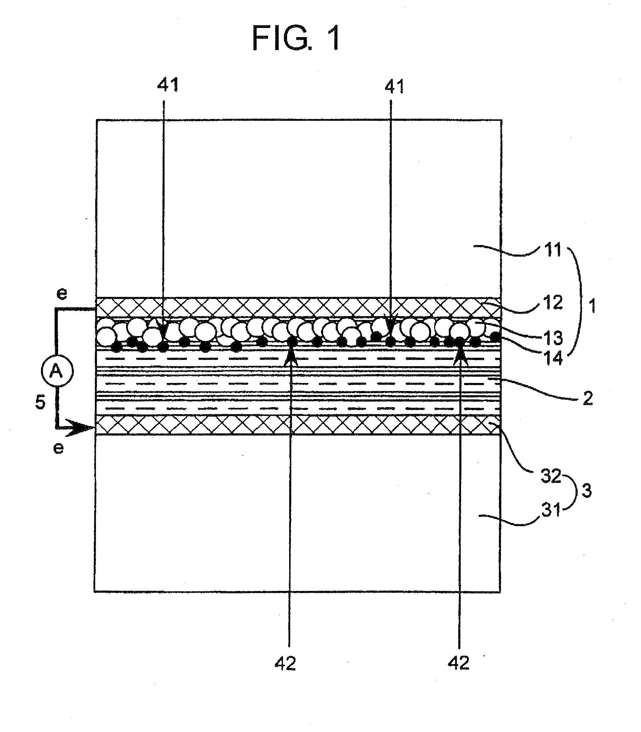

Fig. 1 is a sectional view illustrating a structural example of the dye-sensitized photoelectric conversion device.

The dye-sensitized photoelectric conversion device has a layered structure comprising a photoelectrode layer (1), an electrolyte solution layer (2), and a counter electrode layer (3) in order.

In the present invention, the electrolyte solution layer (2) comprises an electrolyte solution containing an aliphatic quarternary ammonium ion, an imidazolium ion, and iodide ion. The ions are dissolved in an organic solvent containing a five-membered cyclic carbonate. In the electrolyte solution, the amount of iodine or its associated ions, such as triiodide ion (I₃⁻) or pentaiodide ion (I₅⁻) can be reduced according to the present invention to improve transparency of the electrolyte solution.

The photoelectrode layer (1) comprises a photoelectrode substrate and a dye-sensitized semiconductor particle layer. The photoelectrode substrate comprises a transparent substrate (11) and a transparent conductive layer (12). The dye-sensitized semiconductor particle layer comprises semiconductor particles (13) sensitized with a dye (14). In the dye-sensitized photoelectric conversion device of Fig. 1, the inside (pores) of the porous film of the dye-sensitized semiconductor particle layer is filled with an electrolyte solution of the electrolyte solution layer (2).

The counter electrode layer (3) comprises a transparent substrate (31) and a transparent conductive layer (32).

In the present invention, the transparent conductive layers (12, 32) can be made of a metal to reduce voltage loss. In the case that the transparent conductive layers (12, 32) are made of a metal, a metallic mesh or lattice can be used as the layers.

The transparencies of the electrolyte solution layer (2) and the transparent conductive layers (12, 32) can be improved according to the present invention. Therefore, both light (41) incident on the photoelectrode layer (1) and light (42) incident on the counter electrode layer (3) can be used to generate current (5) with high conversion efficiency according to the present invention.

The photoelectrode layer, the electrolyte solution layer, and the counter electrode layer are described below in this order.

### (Photoelectrode layer)

The photoelectrode layer preferably comprises a photoelectrode substrate and a dye-sensitized semiconductor particle layer.

The photoelectrode substrate comprises a transparent conductive layer provided on a transparent substrate.

The transparent substrate preferably is a glass plate or a polymer film. A flexible polymer film is preferred to the glass plate. Examples of the polymer include polyethylene terephthalate (PET), polyethylene naphthalate (PEN), syndiotactic polystyrene (SPS), polyphenylene sulfide (PPS), polycarbonate (PC), polyarylate (PAr), polysulfone (PSF), polyester sulfone (PES), polyether imide (PEI), and polyimide (PI). Polyethylene terephthalate (PET) and polyethylene naphthalate (PEN) are preferred, and polyethylene naphthalate (PEN) is most preferred.

The transparent conductive layer can comprise a metal (e.g., platinum, gold, silver, copper, aluminum, indium, titanium), carbon, a conductive metal oxide (e.g., tin oxide, zinc oxide), or a complex metal oxide (e.g., indium-tin oxide, indium-zinc oxide).

In prior art, the conductive metal oxide has been preferred in view of the optical transparency. Examples of the conductive metal oxide include indium-tin oxide (ITO), tin oxide, and indium-zinc oxide (IZO). The indium-zinc oxide (IZO) is excellent in heat-resistance and chemical stability.

On the other hand, the surface conductive layer should have a low surface resistance. The surface resistance preferably is 15 Ω per square (15 Ω/□) or lower, more preferably is 10 Ω per square (10 Ω/□) or lower, further preferably is 3 Ω (3 Ω/□) per square or lower, furthermore preferably is 1 Ω (1 Ω/□) per square or lower, and most preferably is 0.5 Ω (0.5 Ω/□) per square or lower. A metal is preferred to reduce the surface resistance. However, the metal is not transparent. Further, the metal tends to be corroded with iodine. The former problem can be solved forming the transparent conductive layer with a metallic mesh. The latter problem can be solved reducing the amount of iodine contained in the electrolyte solution according to the present invention.

The photoelectrode substrate comprising a transparent conductive layer provided on a transparent substrate has a transmittance of light (measured wavelength: 500 nm) preferably of not less than 60%, more preferably of not less than 75%, and most preferably of not less than 80%.

The transparent conductive layer can be provided with an auxiliary lead for serving as collector. The layer can be patterned with the auxiliary lead. The auxiliary lead is usually formed with a metal material of a low resistance, such as copper, silver, aluminum, platinum, gold, titanium, and nickel. In the case that the transparent conductive layer is patterned with the auxiliary lead, the surface resistance is measured as the value of the whole surface including the auxiliary lead. The surface resistance of the whole surface preferably is 1 Ω per square or lower. A pattern of the auxiliary lead is preferably formed on the transparent substrate by evaporation or spattering. The transparent conductive layer is preferably formed on the pattern.

The dye-sensitized porous semiconductor particle layer is a mesoporous semiconductor film in which pores of nano size form a network. The semiconductor material used in the porous semiconductor particle layer preferably is a metal oxide or a metal chalcogenide. The metal atoms of the oxide and chalcogenide include titanium, tin, zinc, iron, tungsten, zirconium, strontium, indium, cerium, vanadium, niobium, tantalum, cadmium, lead, antimony, and bismuth.

A preferred semiconductor material is an inorganic semiconductor of n-type, such as TiO₂, TiSrO₃, ZnO, Nb₂O₃, SnO₂, WO₃, Si, CdS, CdSe, V₂O₅, ZnS, ZnSe, SnSe, KTaO₃, FeS₂, and PbS. TiO₂, ZnO, SnO₂, WO₃, and Nb₂O₃ are preferred. Titanium oxide, zinc oxide, tin oxide, and a complex thereof are more preferred. Particularly preferred is titanium dioxide. The primary particles of the semiconductor have an average particle size preferably of not less than 2 nm and not more than 80 nm, and more preferably of not less than 10 nm and not more than 60 nm.

The porous semiconductor particle layer is sensitized with a dye. The photoelectrode layer contains the dye adsorbed on the surface of the porous film. In the dye-sensitized porous semiconductor particle layer, the porosity (volume ratio of the pores to the layer) is preferably of not less than 50% and not more than 85%, and more preferably of not less than 65% and not more than 85%.

The porous semiconductor particle layer can contain two or more kinds of particles, which are different from each other, for example in particle size distribution. In the case that two kinds of particles are different from each other in particle size distribution. The small particles preferably have an average particle size of not more then 20 nm. In this case, large particles having an average particle size of not less than 200 nm are preferably added to the nanoparticles in a weight ratio of 5 to 30% to the amount of the nanoparticles. The large particles are used to improve absorption of light by scattering light.

It is preferred that the photoelectrode layer comprises a photoelectrode substrate (a transparent substrate and a transparent conductive layer) and a dye-sensitized semiconductor particle layer. It is also preferred that the transparent conductive layer substantially consists of an inorganic oxide or a metal. It is further preferred that the dye-sensitized semiconductor particle layer substantially consists of a semiconductor and a dye. In more detail, the solid content other than the inorganic oxide, the metal, the semiconductor, and the dye contained in the transparent conductive layer and the dye-sensitized semiconductor particle layer is preferably adjusted. The solid content preferably is less than 3 weight percent, and more preferably less than 1 weight percent based on the total amount of the transparent conductive layer and the dye-sensitized semiconductor particle layer.

In the case that a polymer film is used the substrate of the photoelectrode layer, the semiconductor film of the photoelectrode layer can be prepared at a low temperature (for example not higher than 200°C, and preferably not higher than 150°C) at which the polymer of the substrate has a heat-resistance. The preparation of the film at the low temperature can be conducted by a pressing method, an aqueous thermal decomposition method, a migration electro-deposition method, or a binder-free coating method. In the binder-free coating method, the film is formed by coating with particle dispersion without use of a binder material such as a polymer.

The binder-free coating method is particularly preferred from the viewpoint of the simple preparation process. A paste of semiconductor particle dispersion used as a coating material in the binder-free coating method substantially does not contain an inorganic or organic binder, which has a function of binding semiconductors. The expression "substantially does not contain a binder" means that the solid content other than the semiconductor contained in the paste (i.e., the solid content of the binder) is not more than 1 weight percent based on the total amount of the semiconductor.

A plastic (polymer film) substrate is coated with the paste of the semiconductor particle dispersion according to the binder-free coating method. After coating, the paste is heated at 150°C to 200°C and dried to form the porous semiconductor particle layer.

The dyes used in sensitization of the porous semiconductor are the same as various organic or metal complex dyes used in spectral sensitization of semiconductor electrode in the electrochemical field. Examples of the dye include organic dyes, such as a cyanine dye, a merocyanine dye, an oxonol dye, a xanthene dye, a squalirium dye, a polymethine dye, a coumarin dye, a riboflavin dye, and a perylene dye, and metal complex dyes, such as a phthalocyanine complex and a porphyrin complex. Examples of the metal contained in the complex include ruthenium and magnesium. The organic dyes such as the coumarin dye are described in Functional Material (written in Japanese), 2003, June, p. 5-18 and J. Phys. Chem., 2003, vol. B107, p. 597.

### (Electrolyte solution layer)

The electrolyte solution layer comprises the above-mentioned electrolyte solution.

In the photoelectrode layer, the pores of the porous structure are preferably filled with the electrolyte solution. In more detail, the ratio of the pore filed with the electrolyte solution preferably is not less than 20 volume percent, and more preferably is not less than 50 volume percent.

The thickness of the electrolyte solution layer can be adjusted by the size of a spacer placed between the photoelectrode layer and the counter electrode layer. The thickness of the layer in which only the electrolyte solution is present outside the photoelectrode is preferably adjusted. The thickness preferably is in the range of 1 µm to 30 µm, more preferably is in the range of 1 µm to 10 µm, further preferably is in the range of 1 µm to 5 µm, and most preferably is in the range of 1 µm to 2 µm.

Light transmittance of the electrolyte solution layer preferably is not less than 70 percent, more preferably is not less than 80 percent, and most preferably is not less then 90 percent. The above-mentioned transmittance is measured when the thickness of the layer is adjusted to 30 µm (light-pass length: 30 µm). The wavelength of light is 400 nm. The transmittance is preferably defined above within the whole wavelength region of 350 to 900 nm.

### (Counter electrode layer)

The counter electrode layer preferably comprises a transparent substrate and a transparent conductive layer. The details of the transparent substrate and the transparent conductive layer are the same as those of the photoelectrode layer.

### [Anti-reflection layer]

An anti-reflection layer can be formed on a surface of the transparent substrate of the photoelectrode layer or the counter electrode layer. The surface is opposite to the side facing the electrolyte solution layer. The anti-reflection layer can also be formed on both surfaces of the transparent substrate.

The anti-reflection layer has a function of reducing reflection loss of light incident on the substrate surface of the transparent substrate to improve transmittance. Therefore, an excellently transparent counter electrode layer can be formed to prepare a dye-sensitized photoelectric conversion device of high conversion efficiency.

The reflectance of the anti-reflection layer is preferably low as possible. The specular (mirror) average reflectance within the wavelength region of 450 to 650 nm preferably is not more than 2%, more preferably is not more than 1%, and most preferably is not more than 0.7%. If the anti-reflection layer does not have an anti-glare function, the haze of the layer preferably is not more than 3%, more preferably is not more than 1%, and most preferably is not more than 0.5%. The hardness of the anti-reflection layer preferably is H or more, more preferably is 2H or more, and most preferably is 3H or more in terms of pencil hardness under weight of 1 kg.

The anti-reflection layer comprises a low refractive index layer only or a combination of a low refractive index layer and a high refractive index layer. The refractive index of the low or high refractive index layer is a relative value. A layer having a relatively low refractive index layer is referred to as a low refractive index layer. A layer having a relatively high refractive index layer is referred to as a high refractive index layer.

Structural examples of the anti-reflection layer are shown below.
(1) Only one low refractive index layer (having a refractive index lower than that of the transparent substrate) is formed on a transparent substrate.
(2) Two layers are formed on a transparent substrate in order of a transparent substrate, a high refractive index layer, and a low refractive index layer.

In the structure of the two layers, the thickness of the high refractive index layer preferably is in the range of 50 to 150 nm, and the thickness of the low refractive index layer preferably is in the range of 50 to 150 nm.
(3) Three layers are formed on a transparent substrate in order of a transparent substrate, a low refractive index layer, a high refractive index layer, and a low refractive index layer.

In the case of (3), the first low refractive index layer facing the transparent substrate has a refractive index between the refractive index of the second high refractive index layer and the refractive index of the third high refractive index layer. In other words, the first layer preferably is a middle refractive index layer.
(4) Four layers are formed on a transparent substrate in order of a transparent substrate, a high refractive index layer, a low refractive index layer, a high refractive index layer, and a low refractive index layer.

In the structure of the four layers, the thickness of the first high refractive index layer facing the transparent substrate preferably is in the range of 5 to 50 nm. The thickness of the second low refractive index layer preferably is in the range of 5 to 50 nm. The thickness of the third high refractive index layer preferably is in the range of 50 to 100 nm. The thickness of the fourth low refractive index layer preferably is in the range of 50 to 150 nm.
(5) Six layers are formed on a transparent substrate in order of a transparent substrate, a high refractive index layer, a low refractive index layer, a high refractive index layer, a low refractive index layer, a high refractive index layer, and a low refractive index layer.

In principal, the furthest layer from the transparent substrate preferably is a low refractive index layer. It is preferred that the high refractive index layer and the low refractive index layer are alternatively formed on the transparent substrate. It is further preferred that 3 to 6 layers are alternatively formed.

### (Low refractive index layer)

The low refractive index layer preferably has a refractive index of 1.55 or lower. Examples of the material forming the low refractive index layer include a silicon compound (e.g., SiO₂), a fluorine compound (e.g., MgF₂), and an aluminum compound (e.g., Al₂O₃). The low refractive index layer can be formed of these compounds according to a gas phase film forming method (such as a vacuum evaporation method, a spattering method, and an ion plating method).

The low refractive index layer can also be formed by preparing a coating solution containing the above-mentioned compound and a (organic or inorganic) polymer, coating a substrate (or a high refractive index layer) with the coating solution, and drying (and hardening, if necessary) the solution. An ultraviolet-hardening resin or a thermally hardening resin can be used as the binder to facilitate formation of the low refractive index layer. In the case that SiO₂ film is formed by coating, the amount of SiO₂ contained in the film is preferably in the range of 30 to 50 weight percent. The low refractive index layer can be formed by coating according to a casting method, a dip coating method, a screen printing method, a roll coater method, a spin coating method, or a spraying method.

### (High refractive index layer)

The high refractive index layer preferably has a refractive index of higher than 1.55. The material for forming the high refractive index layer usually is a metal oxide. Examples of the metal oxide include indium oxide doped with tin (ITO), ZnO, zinc oxide doped with aluminum (ZAO), TiO₂, SnO₂, and ZrO. The high refractive index layer can be formed of these compounds according to a gas phase film forming method.

The high refractive index layer can also be formed by preparing a coating solution containing the above-mentioned compound and a (organic or inorganic) polymer, coating a substrate (or a low refractive index layer) with the coating solution, and drying (and hardening, if necessary) the solution. A resin hardened with ultraviolet ray or heat can be used as the binder to facilitate formation of the high refractive index layer. In the case that ITO film is formed by coating, the amount of ITO contained in the film is preferably in the range of 80 to 89 weight percent. The high refractive index layer can be formed by coating according to a casting method, a dip coating method, or a screen printing method.

### [Other layers]

In addition to the anti-reflection layer, an auxiliary layer can be formed on the surface of the transparent substrate of the photoelectrode layer or the counter electrode layer opposite to the electrolyte solution layer. Examples of the auxiliary include an anti-contamination layer, a hard coating layer, a moisture barrier layer, an antistatic layer, an undercoating layer, a protective layer, an adhesive layer, a shielding layer, and a lubricating layer.

The shielding layer has a function of shielding electromagnetic wave or infrared ray.

The anti-contamination layer can be formed on the anti-reflection layer to improve resistance to contamination on the surface. The anti-contamination layer preferably comprises a fluorine resin or a silicone resin. The anti-contamination layer has a thickness usually in the range of 1 to 1,000 nm.

The hard coating layer has a function of improving scratch hardness of the transparent substrate. The hard coating layer also has a function of enhancing adhesion between the transparent substrate and the layer provided thereon. The hard coating layer can be formed using an acrylic polymer a urethane polymer, an epoxy polymer, a silicone polymer, or a silica compound. A pigment can be added to the hard coating layer. The acrylic polymer is preferably formed by a polymerization reaction of a polyfunctional acrylate monomer (e.g., polyol acrylate, polyether acrylate, urethane acrylate, epoxy acrylate). Examples of the urethane polymer include melamine polyurethane. The silicone polymer preferably is a co-hydrolysis product of a silane compound (e.g., tetraalkoxysilane, alkyltrialkoxysilane) with a silane-coupling agent having a reactive group (e.g., epoxy, methacrylic). Two or more polymers can be used in combination. The silica compound preferably is colloidal silica. The hardness of the hard coating layer preferably is H or more, more preferably is 2H or more, and most preferably is 3H or more in terms of pencil hardness under weight of 1 kg.

### [Wrapping bag]

The solar cell comprising the dye-sensitized photoelectric conversion device can be packaged in a wrapping bag, which preferably is transparent and excellent in resistance to circumstances.

The wrapping bag is preferably made of a transparent plastic film.

The transparent plastic film can be formed of an organic polymer. Examples of the organic polymer include polyolefin, halogenated polyolefin (e.g., polyvinylidene chloride), polyester (e.g., polycarbonate), polyamide, polyimide, cellulose polymer (e.g., cellulose ester, cellulose ether), polyether sulfone, and a copolymer thereof (e.g., ethylene-vinyl alcohol copolymer). Two or more plastic films can be layered.

An antistatic agent, an ultraviolet absorbent, a plasticizer, a lubricant, a coloring agnet, an antioxidant, or an anti-flaming agent can be added to the transparent plastic film. The transparent plastic film has a thickness preferably in the range of 6 to 100 µm.

A space can be present between the solar cell comprising the dye-sensitized photoelectric conversion device and the wrapping bag. The dye-sensitized photoelectric conversion device can also be adhered to the wrapping bag. The space between the dye-sensitized photoelectric conversion device and the wrapping bag can be filled with a liquid or a solid (e.g., liquid or gel of paraffin, silicone, phosphoric ester, or aliphatic ester) that shields water vapor or gas.

The wrapping bag can have a function other than the function of packaging the device. Examples of the functions include a gas barrier function, a sealant function, an anti-contamination function, an anti-scratching function, and an anti-reflection function. In the case that another function is added to the wrapping bag, a layer having the corresponding function (a gas barrier layer, a sealant layer, an anti-contamination layer, an anti-scratching layer, and an anti-reflection layer) can be formed on the above-mentioned transparent plastic film.

The details of the anti-reflection layer are the same as those of the anti-reflection layer formed in the dye-sensitized photoelectric conversion device.

The gas barrier layer and the sealant layer can be formed on inside surface of (the transparent plastic film of) the wrapping bag in this order in the case that two or more functional layers are formed on the wrapping bag. The anti-contamination layer, the anti-scratching layer, or the anti-reflection layer can be formed on outside surface of the bag.

The wrapping bag preferably has a gas barrier layer. The wrapping bag also preferably has at least one of the anti-contamination layer, the anti-scratching layer, and the anti-reflection layer.

Even if the substrate of the photoelectrode layer or the counter electrode layer is made of a material having low permeability to gas (include water vapor), output of the cell may be decayed under severe conditions. The wrapping bag preferably has the gas barrier layer to improve the durability under conditions of high temperature and humidity. In place of forming the gas barrier layer on the wrapping bag, the gas barrier function can be added to the transparent plastic film of the wrapping bag.

The gas barrier layer or the transparent plastic film having the gas barrier function has a transmittance to water vapor preferably of 0.1 g/m²/day or less, more preferably of 0.01 g/m²/day or less, further preferably of 0.0005 g/m²/day or less, and most preferably of 0.00001 g/m²/day or less. The transmittance is measured under conditions at the temperature of 40°C and at the relative humidity of 90% (90%RH).

The transmittance to water vapor is also preferably of not higher than 0.01 g/m²/day, more preferably of not higher than 0.0005 g/m²/day, and most preferably of not higher than 0.00001 g/m²/day under severer conditions at the temperature of 60°C and at 90%RH. The transmittance to oxygen is preferably of 0.001 cc/m²/day or less, and more preferably of 0.00001 cc/m²/day or less under conditions at the temperature of 25°C and at 0%RH.

The gas barrier layer preferably is a layer comprising a mixture of a polyvinyl alcohol resin and an inorganic layered compound or a vapor deposition thin layer (thickness: 5 to 300 nm) of an inorganic layered oxide

(e.g., aluminum oxide, silicon oxide, magnesium oxide, and a mixture thereof).

Examples of the gas barrier layer include a vapor deposition layer of silicon oxide or aluminum oxide (Japanese Patent Publication No. 53(1988)-12953, Japanese Patent Provisional Publication No. 58(1993)-217344), an organic and inorganic hybrid coating layer (Japanese Patent Publication Nos. 2000-323273, 2004-25732), and a layer of inorganic layered compound (Japanese Patent Publication No. 2001-205743). Other examples include a layered inorganic compound (Japanese Patent Publication Nos. 2003-206361, 2006-263989), alternatively layered organic and inorganic layers (Japanese Patent Publication No. 2007-30387, US Patent No. 6,413,645, Affinito et al, Thin Solid Films, 1996, p. 290-291), and continuously layered organic and inorganic layers (US Patent Publication No. 2004/46497).

In the case that a barrier layer comprising inorganic and organic layers is provided on the transparent plastic film of the wrapping bag, the organic layer can be formed by polymerization of a monomer mixture including vinyl monomer having sulfinyl or sulfonyl (Japanese Patent Publication No. 2009-28949). A transparent gas barrier film having a thin film containing silicon and nitrogen atoms can be provided on one or both sides of the transparent plastic film (Japanese Patent Publication No. 2008-240131). The ratio of silicon atom to nitrogen atom in the thin film is SiNx (0.5 ≤ x ≤ 1.4). The thin film has a thickness preferably in the range of 20 to 50 nm.

A gas barrier layer comprising layered at least one inorganic layer and at least one organic layer can be provided on the transparent plastic film of the wrapping bag. The organic layer can contain a polymer including phosphoric ester (Japanese Patent Publication No. 2007-290369). A gas barrier layer comprising layered at least one inorganic layer and at least one amorphous carbon layer containing amorphous carbon as the main component can be provided on the he transparent plastic film. The ratio of number of oxygen atoms to number of carbon atoms (oxygen atom/carbon atom) on the surface of the amorphous carbon layer can be adjusted to not less than 0.01 (Japanese Patent Publication No. 2007-136800).

A gas barrier layer can comprise a layer A comprising a polyvinyl alcohol resin, a hydrolysis product (e.g., silicon alkoxide), and a layered silica salt and a layer B comprising a polyvinyl alcohol resin and a layered silica salt. The gas barrier layer can be provided in this order (layer A/layer B) on an anchor layer formed on at least one surface the transparent plastic film of the wrapping bag (Japanese Patent Publication No. 2005-225117).

The other examples of the gas barrier layer include inorganic thin films (e.g., silicon oxide film, silicon nitride film, silicon oxide nitride film, silicon carbide film, aluminum oxide film, aluminum oxide nitride film, titanium oxide film, zirconium oxide film, diamond-like carbon film). The gas barrier layer can also have a layered structure of the above-mentioned inorganic film having a high gas barrier function and a flexible organic film.

The materials of the wrapping bag should not reduce quantity of light required for the solar cell. The material of the wrapping bag has a transmittance to light preferably of not less than 50%, more preferably of not less than 70%, further preferably of not less than 85%, and most preferably of not less than 90%.

The solar cell comprising the dye-sensitized photoelectric conversion device is packaged in the wrapping bag. After the end of cable (lead-out wire) is pulled out from the bag, the cell is preferably vacuum packed. The vacuum packaging can prevent the solar cell from influence from outside (invasion of gas such as oxygen, water vapor) without decreasing output of the solar cell. The vacuum packaging further has a function of keeping performance of the solar cell for a long time by protecting the display surface from contamination or scratch or by preventing surface reflection. The cable (lead-out wire) is preferably fixed with a filler resin having a high barrier function (e.g., EVA resin) to be connected to an outer apparatus using voltage power.

### [Examples]

### [Example 1]

### (1) Preparation of electrolyte solution

In a measuring flask of 5 mL, 0.066 g of N-methylbenzimidazole, 0.738 g of tetrabutylammonium iodide, 0.532 g of 1,3-butylmethylimidazolium iodide, and 0.58 g of guanidine thiocyanate was placed. Propylene carbonate was added to the mixture to give a total amount of 5 mL. The mixture was stirred with vibration for 1 hour in an ultrasonic wave washing machine. The flask was placed in a dark calm place for 24 hours to prepare an electrolyte solution containing no iodine.

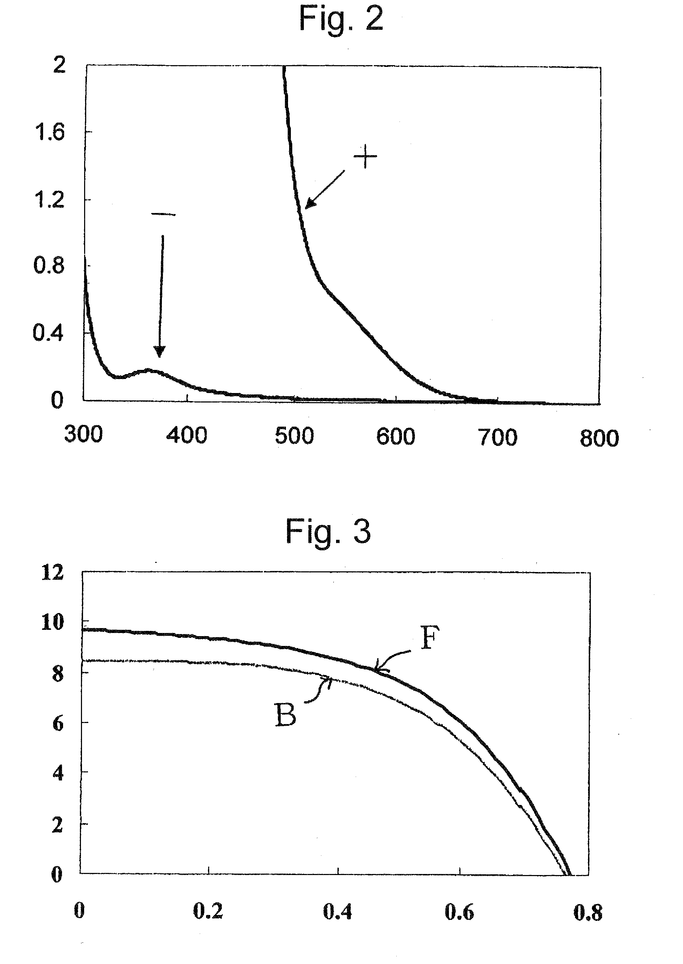

A reference electrolyte solution containing iodine was prepared adding 0.04 M of iodine to the above-prepared electrolyte solution. Absorption spectra of the electrolyte solution containing no iodine and the solution containing iodine were measured at optical pass length of 1 mm. The results are shown in Fig. 2.

Fig. 2 is absorption spectra of the electrolyte solution containing no iodine (-) and the solution containing iodine (+), which is in the form of triiodide ion in the electrolyte solution. The horizontal axis means the wavelength (nm), and the vertical axis means the absorbance. The electrolyte solution containing no ance. The electrolyte solution containing no iodine (-) has little absorption within the visible wavelength region, as is shown in Fig. 2. Accordingly, the solution containing no iodine substantially is transparent.

### (2) Preparation of dye solution

In a measuring flask of 20 mL, 7.2 mg of ruthenium complex dye (N719, SOLARONIX SA) was placed. Into the flask, 10 mL of tert-butanol was further added. The mixture was stirred. To the mixture, 8 mL of acetonitrile was added. After the flask was closed with a plug, the mixture was stirred with vibration for 60 minutes in an ultrasonic wave washing machine. The obtained solution was kept at room temperature, and acetonitrile was added to the solution to give a total amount of 20 mL.

### (3) Preparation of photoelectrode layer

A polyethylene terephthalate film was coated with a film of indium tin oxide (ITO) to prepare a transparent conductive film (ITO-PEN film, thickness: 200 µm, sheet resistance: 15 ohm/sq). The film was cut into pieces of 2 cm × 10 cm. After the ITO surface was washed with methanol, the film was fixed on a smooth glass plate using a vacuum pomp to arrange the ITO surface as the top of the film. The surface was coated with a binder-free titanium oxide paste containing no binder component (PECC-C01-06, Peccell Technologies, Inc.) using a baker type applicator. The coated thickness was 150 µm. The paste was dried at room temperature for 10 minutes, and further dried on a hot plate at 150°C for 5 minutes to form a titanium oxide nano-porous film.

After the titanium oxide film was left and cooled, the film was cut into pieces of 1.5 cm × 2.0 cm. The titanium oxide film was removed from the cut film within the circular area having the diameter of 6 mm using a toothpick to form an electrode. The circular area was placed with the distance of 2 mm from the short side (side of 1.5 cm) of the film.

The titanium oxide electrode was again dried while heating at 110°C for 10 minutes. The electrode was immersed in the above-prepared solution containing 0.4 mM of N719 dye. For one sheet of the electrode, 2 mL or more of the dye solution was used.

The dye solution was kept at 40°C. The electrode was lightly shaken in the solution to complete absorption of the dye. After 2 hours, the titanium oxide film absorbing the dye was taken out from a laboratory dish, washed with acetonitrile, and dried.

### (4) Preparation of counter electrode layer

An aqueous solution of chloroplatinic acid was sprayed on a glass substrate. After drying the substrate, the substrate was heated at 400°C for 20 minutes to cause decomposition to form a platinum film having an average thickness of about 5 nm. The prepared counter electrode glass substrate has light transmittance of 72%.

### (5) Preparation of dye-sensitized photoelectric conversion device

A Surlyn film (Du pont) having the thickness of 25 µm was cut into pieces of 14 mm square. A circle having the diameter of 9 mm was removed from the center of the cut piece to form a spacer film.

The spacer film was sandwiched between the titanium oxide electrode film absorbing the dye and the counter electrode film, while arranging electrode surfaces to face the spacer film. The films were pressed on a hot plate heated at 110°C for 1 minute.

After the lamination was left and cooled, the electrolyte solution was injected into one of the holes formed in the glass plate of the counter electrode.

The hole for injection of the electrolyte solution was sealed with a cover glass using a Surlyn film at 110°C. A soldering iron heated at 110°C was pressed on the cover glass to complete adhesion of the cover glass.

The terminals at the electrode of the prepared dye-sensitized photoelectric conversion device were covered with a conductive aluminum tape (No. 5805, SLIONTEC CORPORATION) to improve collecting efficiency.

### (6) Evaluation as dye-sensitized solar cell

A pseudo-sun light source (PEC-L11 type, Peccell Technologies, Inc.) comprising a light source device of a xenon lump of 150 W with an AM 1.5G filter was used as light source. The quantity of light was adjusted to 1 sun (AM 1.5G, 100 mWcm⁻² (class A according to JIS-C-8912)). The prepared dye-sensitized solar cell was connected to a source meter (source meter of 2,400 type, Keithley). The current-voltage characteristic was evaluated measuring output current while the bias voltage was changed from 0 V to 0.8 V by the unit of 0.01 V under irradiation of light of 1 sun. The output current was measured at each of the voltage steps by integrating the value from 0.05 second to 0.15 second after changing the voltage. The measurement was further conducted while the bias voltage was changed from 0.8 V to 0 V in reverse. The average of the two results of the first and reverse orders was treated as the photocurrent data.

The results are set forth in Fig. 3.

Fig. 3 is a chart showing current-voltage characteristic of the dye-sensitized photoelectric conversion device of the present invention. F shows the results of light incident on the front side (photoelectrode layer). B shows the results of light incident on the backside (counter electrode layer). The horizontal axis means voltage (V), and the vertical axis means current density (mAcm⁻²). As is shown in Fig. 3, the difference between the result of light incident on the front side and that of light incident on the backside is small. The results are obtained by the extremely transparent electrolyte solution.

### (7) Evaluation of durability

The dye-sensitized solar cell was left at the temperature of 25°C and the relative humidity of 60% for 24 hours. The cell was further heated in a dry box at 60°C for 500 hours, and left at the temperature of 25°C and the relative humidity of 60% for 24 hours.

After the above-mentioned durability test, the dye-sensitized solar cell was evaluated in the same manner as in (6) to measure the output current. As a result, the output current was reduced by about 10%.

### [Example 2]

A dye-sensitized photoelectric conversion device was prepared in the same manner as in Example 1, except that γ-butyrolactone was used in place of propylene carbonate in preparation of electrolyte solution of Example 1 (1).

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

Further, the dye-sensitized photoelectric conversion device was evaluated in the same manner as in Example 1 (6), except that output current was measured while inclining the device at 60° to light. The output current was compared with that of light perpendicularly incident to the device. The former result was 80% of the latter result.

The durability of the dye-sensitized photoelectric conversion device was evaluated in the same manner as in Example 1 (7). The output current was reduced by about 5% after the durability test.

### [Example 3]

A dye-sensitized photoelectric conversion device was prepared in the same manner as in Example 1, except that 3-methoxypropionitrile was used in place of propylene carbonate in preparation of electrolyte solution of Example 1 (1).

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

The durability of the dye-sensitized photoelectric conversion device was evaluated in the same manner as in Example 1 (7). The output current was reduced by about 6% after the durability test.

### [Example 4]

### (Preparation of photoelectric electrode layer having anti-reflection layer)

A polyethylene terephthalate film was coated with indium tin oxide (ITO) to prepare a transparent conductive film (ITO-PEN film, thickness: 200 µm, sheet resistance: 15 ohm/sq). The surface opposite to the ITO layer was coated with a hard coating paint (ELCOM P-4513, JGC Catalysts and Chemicals Ltd), and dried to form a hard coating layer having the dry thickness of 5 µm. A coating solution of a high refractive index layer was prepared by using 0.3 weight part of an ultraviolet-hardening epoxy ester resin (80MFA, KYOEISHA CHEMICAL Co., Ltd.), 1 weight part of titanium oxide slurry having the pigment concentration of 40 weight percent (710T, TAYCA CORPORATION), 0.01 weight part of a photo-polymerization initiator, and 35 weight parts of methyl ethyl ketone. The hard coating layer was coated with the coating solution, and dried to form a layer having the dry thickness of 80 nm. The layer was irradiated with ultraviolet ray of 1 J/cm² using a high-pressure mercury lump to harden the ultraviolet-hardening resin. The formed high refractive index layer has refractive index of 1.73. The high refractive index layer was coated with a coating solution for high refractive index layer (ELCOM P-5012, JGC Catalysts and Chemicals Ltd), and dried to form a layer having the dry thickness of 70 nm.

The anti-reflection layer formed on the electroconductive transparent substrate has the minimum refractive index of 0.25%, the transmittance to whole light of 94.4%, and the haze of 0.55%. The pencil hardness of the anti-reflection layer was 3H. No scratch was observed after a scratching test. No layers were peeled after adhesion test.

### (Preparation of dye-sensitized photoelectric conversion device and evaluation as dye-sensitized solar cell)

A dye-sensitized photoelectric conversion device was prepared in the same manner as in Example 2, except that the photoelectrode layer having the anti-reflection layer was used in place of the photoelectrode layer of the dye-sensitized photoelectric conversion device of Example 2.

The dye-sensitized photoelectric conversion device was evaluated in the same manner as in Example 1 (6), except that output current was measured while inclining the device at 60° to light. The output current was compared with that of light perpendicularly incident to the device. The former result was about 90% of the latter result.

### [Example 5]

### (Preparation of photoelectric electrode layer having anti-reflection layer)

One surface of a glass plate having the size of 5 cm × 5 cm (thickness: 2 mm) was coated with a coating solution of an ultraviolet hardening acrylic resin in which ITO fine powders having the refractive index of 1.7 were dispersed. The coated layer was dried to form a film having the dry thickness of 100 nm (ITO content: 84 weight percent). The film was irradiated with ultraviolet layer of 300 mJ/cm² in nitrogen atmosphere to harden the resin. The film was coated with a coating solution of an ultraviolet hardening acrylic resin in which silicon dioxide fine powders having the refractive index of 1.5 were dispersed. The coated layer was dried to form a film having the dry thickness of 100 nm (silicon oxide content: 40 weight percent). The film was irradiated with ultraviolet lay of 300 mJ/cm² in nitrogen atmosphere to harden the resin to form an anti-reflection layer comprising two films.

A transparent electrode film was formed on the other surface of the glass plate using a preparative spattering device. In more detail, an ITO (indium-tin oxide) film having the thickness of 3,000 Å was formed on the surface of the glass plate on which the anti-reflection layer was not formed. The spattering process was conducted for 5 minutes using a ceramic target of ITO of 100 mm Φ under the condition of supplying electric power of 500 W after supplying argon gas (50 cc per minute) and oxygen gas (3 cc per minute)

A titanium oxide film having the thickness of 3,000 Å was formed on the transparent electrode film of the glass plate using a preparative vacuum evaporation device of a facing target system. The vacuum evaporation process was conducted for 60 minutes arranging two sheets of a metallic target of titanium having the diameter of 100 mm under the condition of adjusting the pressure of 5 mToor in the device and supplying electric power of 3 kW after supplying oxygen gas (5 cc per minute) and argon gas (5 cc per minute).

A sensitizing dye (cis-di(thiocyanate)-N,N-bis(2,2'-bipyridyl-4-carboxylate-4'-tetrabutylammoniumcarboxylate) ruthenium (II)) was dissolved in ethanol. The concentration of the sensitizing dye was 3×10⁻⁴ mole per liter.

The substrate having the above-prepared titanium oxide film was placed in the ethanol solution, and immersed for 18 hours at room temperature to obtain the photoelectrode layer having the anti-reflection layer.

### (Preparation of dye-sensitized photoelectric conversion device and evaluation as dye-sensitized solar cell)

A dye-sensitized photoelectric conversion device was prepared in the same manner as in Example 2, except that the photoelectrode layer having the anti-reflection layer was used in place of the photoelectrode layer of the dye-sensitized photoelectric conversion device of Example 2.

The dye-sensitized photoelectric conversion device was evaluated in the same manner as in Example 1 (6), except that output current was measured while inclining the device at 60° to light. The output current was compared with that of light perpendicularly incident to the device. The former result was about 92% of the latter result.

### [Comparison Example 1]

### (Preparation of electrolyte solution)

Lithium iodide (0.1 mole per liter), 1-propyl-2,3-dimethylimidazolium iodide (0.5 mole per liter), iodine (0.05 mole per liter), and 4-t-butylpyridine (0.5 mole per liter) were dissolved in 3-methoxypropionitrile.

### (Preparation of dye-sensitized photoelectric conversion device and evaluation as dye-sensitized solar cell)

A dye-sensitized photoelectric conversion device was prepared in the same manner as in Example 2, except that the above-prepared electrolyte solution was used.

The durability of the dye-sensitized photoelectric conversion device was evaluated in the same manner as in Example 1 (7). The output current was reduced by about 25% after the durability test.

### [Example 6]

### (Preparation of wrapping bag)

A silicon oxide thin layer having the thickness of 30 nm was formed by evaporation on one surface of a biaxially stretched polyethylene terephthalate film having the thickness of 12 µm. The deposited thin layer was coated with a polyurethane adhesive (dry coating amount: 3 g/m²). A biaxially stretched Nylon film having the thickness of 15 µm was laminated on the adhesive. The Nylon film was coated with a polyurethane adhesive (dry coating amount: 3 g/m²). A non-stretched polypropylene film having the thickness of 30 µm was laminated on the adhesive.

A silane-coupling agent having perfluoropolyether groups represented by C₃F₇-(OC₃F₆)₂₄-O-(CF₂)₂-C₂H₄-O-CH₂Si(OCH₃)₃ was dissolved in perfluorosiloxane to prepare a 0.5 weight percent diluted solution. The other surface of the biaxially stretched polyethylene terephthalate film was coated with the solution, and dried to form an anti-contamination layer having the thickness of 3 µm.

The resulting laminated material was slit into pieces of the prescribed dimension. Two sheets was placed facing the non-stretched polypropylene film surface. The three edges were sealed by heating. The other one edge was left as the mouth. Thus, a wrapping bag (having three sealed edges) was prepared.

### (Use and evaluation of wrapping bag)

A cable was connected to the dye-sensitized photoelectric conversion device prepared in Example 2. The device was inserted into the mouth of the bag. The other end of the cable was placed outside of the bag. After the air was removed from the bag in vacuum, the bag was sealed by heat.

The durability of the dye-sensitized photoelectric conversion device packaged in the bag was evaluated in the same manner as in Example 1 (7). The output current was reduced by about 5% after the durability test.

### [Example 7]

### (Preparation of wrapping bag)

A silicon oxide thin layer having the thickness of 30 nm was formed by evaporation on one surface of a biaxially stretched polyethylene terephthalate film having the thickness of 12 µm. The deposited thin layer was coated with a polyurethane adhesive (dry coating amount: 3 g/m²). A non-stretched polypropylene film having the thickness of 30 µm was laminated on the adhesive.

An ultraviolet hardening acrylic resin was coated on the other surface of the biaxially stretched polyethylene terephthalate film to form a scratch hardness layer (dry coating amount 0.5 g/m²).

The resulting laminated material was slit into pieces of the prescribed dimension. Two sheets was placed facing the non-stretched polypropylene film surface. The three edges were sealed by heating. The other one edge was left as the mouth. Thus, a wrapping bag (having three sealed edges) was prepared.

### (Use and evaluation of wrapping bag)

A cable was connected to the dye-sensitized photoelectric conversion device prepared in Example 2. The device was inserted into the mouth of the bag. The other end of the cable was placed outside of the bag. After the air was removed from the bag in vacuum, the bag was sealed by heat.

The durability of the dye-sensitized photoelectric conversion device packaged in the bag was evaluated in the same manner as in Example 1 (7). The result was the same as that of Example 6.

### [Example 8]

### (Preparation of electrolyte solution)

A electrolyte solution was prepared in the same manner as in preparation of electrolyte solution of Example 1 (1), except that the same amount (mole per liter) of 1-butyl-3-methylimidazolium iodide was used in place of 1,3-butylmethylimidazolium iodide and γ-butyrolactone (organic solvent) was used in place of propylene carbonate.

### (Preparation of dye-sensitized photoelectric conversion device and evaluation as dye-sensitized solar cell)

A dye-sensitized photoelectric conversion device was prepared in the same manner as in Example 1, except that the above-prepared electrolyte solution was used.

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

The durability of the dye-sensitized photoelectric conversion device was evaluated in the same manner as in Example 1 (7). It was confirmed that the durability is improved compared with the result of Example 1.

### [Example 9]

### (Preparation of electrolyte solution)

An electrolyte solution was prepared in the same manner as in preparation of electrolyte solution of Example 1 (1), except that the components were changed as is described below. The same amount (mole per liter) of N-hexylbenzimidazole was used in place of N-methylbenzimidazole. The same amount (mole per liter) of tetrahexylammonium was used in place of tetrabutylammonium. The same amount (mole per liter) of 1-(2-(2-(2-methoxyethoxy)ethoxy)ethyl)-3-(2-(2-methoxyethoxy)ethyl)-imidazolium iodide was used in place of 1,3-butylmethylimidazolium iodide. The same amount (mole per liter) of N-methylguanidine thiocyanate was used in place of guanidine thiocyanate. Further, propionitrile (organic solvent) was used in place of propylene carbonate.

### (Preparation of dye-sensitized photoelectric conversion device and evaluation as dye-sensitized solar cell)

A dye-sensitized photoelectric conversion device was prepared in the same manner as in Example 1, except that the above-prepared electrolyte solution was used.

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

The durability of the dye-sensitized photoelectric conversion device was evaluated in the same manner as in Example 1 (7). It was confirmed that the durability is improved compared with the result of Example 1.

### [Example 10]

### (Preparation of electrolyte solution)

An electrolyte solution was prepared in the same manner as in preparation of electrolyte solution of Example 1 (1), except that the components were changed as is described below. The same amount (mole per liter) of N-hexylbenzimidazole was used in place of N-methylbenzimidazole. The same amount (mole per liter) of tetrahexylammonium was used in place of tetrabutylammonium. The same amount (mole per liter) of 1-(2-(2-(2-methoxyethoxy)ethoxy)ethyl)-3-(2-(2-methoxyethoxy)ethyl)imidazolium iodide was used in place of 1,3-butylmethylimidazolium iodide. The same amount (mole per liter) of N-methylguanidine thiocyanate was used in place of guanidine thiocyanate. Further, methoxypropionitrile (organic solvent) was used in place of propylene carbonate.

### (Preparation of dye-sensitized photoelectric conversion device and evaluation as dye-sensitized solar cell)

A dye-sensitized photoelectric conversion device was prepared in the same manner as in Example 1, except that the above-prepared electrolyte solution was used.

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

The durability of the dye-sensitized photoelectric conversion device was evaluated in the same manner as in Example 1 (7). It was confirmed that the durability is improved compared with the result of Example 1.

### [Example 11]

### (Preparation of electrolyte solution)

An electrolyte solution was prepared in the same manner as in preparation of electrolyte solution of Example 1 (1), except that the components were changed as is described below. The same amount (mole per liter) of N-hexylbenzimidazole was used in place of N-methylbenzimidazole. The same amount (mole per liter) of tetrahexylammonium was used in place of tetrabutylammonium. The same amount (mole per liter) of 1,3-di(2-(2-(2-methoxyethoxy)ethoxy)ethyl)imidazolium iodide was used in place of 1,3-butylmethylimidazolium iodide. Further, γ-valerolactone (organic solvent) was used in place of propylene carbonate.

### (Preparation of dye-sensitized photoelectric conversion device and evaluation as dye-sensitized solar cell)

A dye-sensitized photoelectric conversion device was prepared in the same manner as in Example 1, except that the above-prepared electrolyte solution was used.

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

The durability of the dye-sensitized photoelectric conversion device was evaluated in the same manner as in Example 1 (7). It was confirmed that the durability is improved compared with the result of Example 1.

### [Example 12]

### (Preparation of dye solution)

A dye solution was prepared in the same manner as in preparation of dye solution of Example 1 (2), except that 2-cyano-3-[5"'-(9-ethylcarbazol-3-yl)-3',3",3"',4-tetra-n-hexyl-2,2':5',2":5",2"'-quarter-thiophen-5-yl]acrylic acid was used in place of the ruthenium complex dye.

### (Preparation of dye-sensitized photoelectric conversion device and evaluation as dye-sensitized solar cell)

A dye-sensitized photoelectric conversion device was prepared in the same manner as in Example 1, except that the above-prepared dye solution was used.

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

The durability of the dye-sensitized photoelectric conversion device was evaluated in the same manner as in Example 1 (7). It was confirmed that the durability is improved compared with the result of Example 1.

### [Example 13]

### (Preparation of dye solution)

A dye solution was prepared in the same manner as in preparation of dye solution of Example 1 (2), except that poly(pyridinium-1,4-diyl-iminocarbonyl-1,4-phenylenemethylene) chloride was used in place of the ruthenium complex dye.

### (Preparation of dye-sensitized photoelectric conversion device and evaluation as dye-sensitized solar cell)

A dye-sensitized photoelectric conversion device was prepared in the same manner as in Example 1, except that the above-prepared dye solution was used.

The obtained dye-sensitized photoelectric conversion device was evaluated in the same manner as in Example 1 (6). The obtained output current was excellent in analogy to that of Example 1. Further, the result of light incident on the front side is analogous to that of light incident on the backside.

The durability of the dye-sensitized photoelectric conversion device was evaluated in the same manner as in Example 1 (7). It was confirmed that the durability is improved compared with the result of Example 1.

### [Example 14]

### (1) Formation of anchor-coating layer

An isocyanate compound (Coronate L, Nippon Polyurethane Industry Co., Ltd.) and saturated polyester (VYLON 300, TOYOBO Co., Ltd.) were mixed at the weight ratio of 1:1.

One surface of a biaxially stretched polyethylene terephthalate film (transparent plastic film) having the thickness of 50 µm was coated with the mixture, and dried to form an anchor-coating layer.

### (2) Formation of inorganic thin film layer

SiO was evaporated in vacuum of 1×10⁻⁵ Torr using a vacuum evaporating device according to a high-frequency heating method to form an inorganic thin film layer having the thickness of about 20 nm on the anchor-coating layer.

### (3) Formation of organic layer

### (3-1) Preparation of aqueous polyvinyl alcohol solution

Polyvinyl alcohol having the saponification degree of 99 mole percent or more and the polymerization degree of about 1,400 (GOHSENOL NM-14, The Nippon Synthetic Chemical Industry Co., Ltd.) was added into ion-exchanged water while stirring, and dissolved at 95°C for 60 minutes to prepare an aqueous polyvinyl solution having the solid content of 10%.

### (3-2) Preparation of aqueous ethylene-acrylic acid copolymer solution

Ethylene-acrylic acid copolymer (acrylic acid: 20 weight percent, MFR (melt flow rate): 30 g per minute), ammonia, and ion-exchanged water was mixed, and stirred at 95°C for 2 hours to prepare an aqueous ethylene-acrylic acid copolymer solution having the solid content of 20%. The degree of neutralization was 50%.

### (3-3) Preparation of aqueous silica sol

A colloidal silica sol was prepared using an aqueous silicate solution according to a conventional method. The colloidal silica sol was passed through a hydrogen-type cation-exchange resin, a hydroxide-type anion-exchange resin, and again a hydrogen-type cation-exchange resin. Ammonia water was added to the sol to prepare aqueous silica sol having the average particle size of 4 nm. The pH was 9, and the concentration of metal oxide was less than 500 ppm.

### (3-4) Preparation of cross-linking agent liquid

To 130 weight parts of hexamethylene diisocyanate, 170 weight parts of polyethylene glycol monomethyl ether (average molecular weight: 400), 20 weight parts of 4,4'-dicyclohexylmethane diisocyanate, and 3 weight parts of 3-methyl-1-phenyl-2-phosphorene-1-oxide were added. The mixture was reacted at 185°C in nitrogen flow to prepare a cross-linking agent liquid containing carbodiimido groups.

### (3-5) Preparation and coating of organic layer

The aqueous polyvinyl alcohol solution, the aqueous ethylene-acrylic acid copolymer solution, the aqueous silica sol, and the cross-linking agent liquid were mixed to prepare a coating solution of an organic layer. The weight ratio of polyvinyl alcohol/ethylene-acrylic acid copolymer/inorganic particles/cross-linking agent was adjusted to 5/80/30/5.

The inorganic thin film layer was coated with a coating solution of an organic layer according to a gravure coating method. The wet thickness was 2.9 g/m², and the film running speed was 200 m/minute. The solution was air-dried at 90°C for 5 seconds to form an organic layer having the thickness of 0.4 µm.

### (4) Preparation of wrapping bag

The inorganic thin film layers and the organic layers were alternatively formed on the anchor-coating layer. A layered barrier layer comprising eight layers of an inorganic thin film layer, an organic layer, an inorganic thin film layer, an organic layer, an inorganic thin film layer, an organic layer, an inorganic thin film layer, and an organic layer in this order was formed.

A wrapping bag was prepared in the same manner as in Example 6, except that the obtained transparent plastic film having the barrier layer was used.

### (5) Evaluation of wrapping bag

The dye-sensitized photoelectric conversion device was packaged in the same manner as in Example 6, except that the prepared wrapping bag was used.

The durability of the dye-sensitized photoelectric conversion device packaged in the bag was evaluated in the same manner as in Example 1 (7). The output current was reduced by about 1% after the durability test.

### [Industrial availability]

The dye-sensitized photoelectric conversion device of the present invention has high energy conversion efficiency, even if the amount of iodine added into the electrolyte solution is significantly reduced.

### [Descriptions of the numerals]

- 1: Photoelectrode layer
- 11: Transparent substrate
- 12: Transparent conductive layer
- 13: Semiconductor particles
- 14: Sensitizing dye
- 2: Electrolyte solution layer
- 3: Counter electrode layer
- 31: Transparent substrate
- 32: Transparent electrode layer
- 41: Light incident on photoelectrode layer side
- 42: Light incident on counter electrode layer side
- 5: Current
- -: Electrolyte solution containing no iodine
- +: Electrolyte solution containing iodine

Horizontal axis in Fig. 2
Wavelength (nm)

Vertical axis in Fig. 2
Absorbance

F Result of light incident on front (photoelectrode layer) side

B Result of light incident on back (counter electrode layer) side

Horizontal axis in Fig. 3
Voltage (V)

Vertical axis in Fig. 3
Current density (mAcm⁻²)

## Claims

1. A dye-sensitized photoelectric conversion device having a porous photoelectrode layer comprising dye-sensitized semiconductor particles, an electrolyte solution layer, and a counter electrode layer in order, wherein the electrolyte solution layer comprises an electrolyte solution containing 0.05 to 5 M of an aliphatic quarternary ammonium ion represented by the following formula (I), 0.05 to 5 M of an imidazolium ion represented by the following formula (II), and 0.1 to 10 M of iodide ion which are dissolved in an organic solvent: 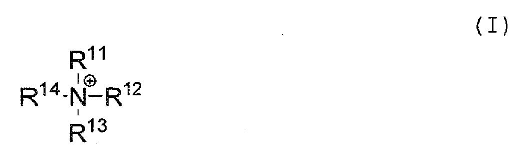 wherein each of R¹¹, R¹², R¹³, and R¹⁴ independently is an aliphatic group having 1 to 20 carbon atoms; 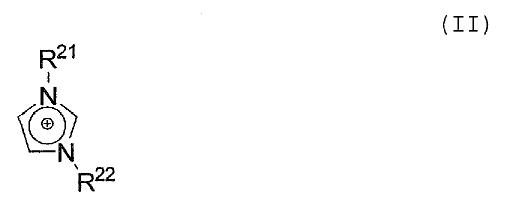 wherein each of R²¹ and R²² independently is an aliphatic group having 1 to 20 carbon atoms.

2. The dye-sensitized photoelectric conversion device defined in claim 1, wherein a ratio of triiodide ion to iodide ion in the electrolyte solution is less than 1 mole percent.

3. The dye-sensitized photoelectric conversion device defined in claim 1, wherein the organic solvent is selected from the group consisting of a five-membered cyclic carbonate, a five-membered cyclic ester, an aliphatic nitrile, a linear aliphatic ether, and a cyclic aliphatic ether.

4. The dye-sensitized photoelectric conversion device defined in claim 3, wherein the organic solvent contains a five-membered cyclic carbonate represented by the following formula (III): 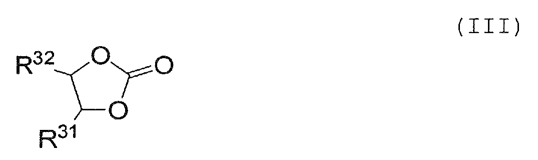 wherein each of R³¹ and R³² independently is hydrogen or an aliphatic group having 1 to 20 carbon atoms.

5. The dye-sensitized photoelectric conversion device defined in claim 1, wherein each of R¹¹, R¹², R¹³, and R¹⁴ in the aliphatic quarternary ammonium ion of the formula (I) independently is an alkyl group having 1 to 20 carbon atoms.

6. The dye-sensitized photoelectric conversion device defined in claim 1, wherein each of R²¹ and R²² in the imidazolium ion of the formula (II) independently is an alkyl group or an alkyl group substituted with an alkoxy group represented by the following formula (II-R):
-(CₙH₂ₙO-)ₘ-R²³ (II-R)
wherein R²³ is an alkyl group having 1 to 6 carbon atoms, n is 2 or 3, and m is an integer of 0 to 6.

7. The dye-sensitized photoelectric conversion device defined in claim 1, wherein 0.01 to 1 M of a benzimidazole compound represented by the following formula (IV) is further dissolved in the organic solvent of the electrolyte solution: 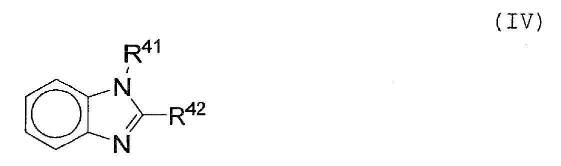 wherein R⁴¹ is an aliphatic group having 1 to 20 carbon atoms, and R⁴² is hydrogen or an aliphatic group having 1 to 6 carbon atoms.

8. The dye-sensitized photoelectric conversion device defined in claim 7, wherein R⁴¹ is an alkyl group having 1 to 12 carbon atoms, an aralkyl group having 7 to 12 carbon atoms, or an alkoxyalkyl group having 2 to 12 carbon atom, and R⁴² is hydrogen or an alkyl group having 1 to 3 carbon atoms in the benzimidazole compound of the formula (IV).

9. The dye-sensitized photoelectric conversion device defined in claim 1, wherein 0.01 to 1 M of thiocyanate ion or isothiocyanate ion is further dissolved in the organic solvent of the electrolyte solution.

10. The dye-sensitized photoelectric conversion device defined in claim 1, wherein 0.01 to 1 M of a guanidium ion represented by the following formula (V) is further dissolved in the organic solvent of the electrolyte solution: 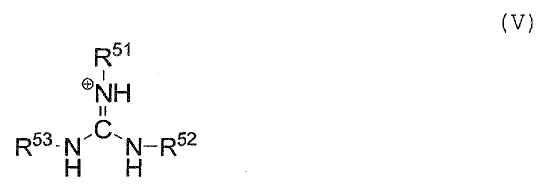 wherein R⁵¹, R⁵², and R⁵³ independently is hydrogen or an aliphatic group having 1 to 20 carbon atoms.

11. The dye-sensitized photoelectric conversion device defined in claim 10, wherein the guanidium ion of the formula (V) has no substituent.

12. The dye-sensitized photoelectric conversion device defined in claim 1, wherein the photoelectrode layer comprises a substrate and a conductive metal layer provided on the substrate on the side facing the electrolyte solution layer.

13. The dye-sensitized photoelectric conversion device defined in claim 1, wherein the counter electrode layer comprises a substrate and a conductive metal layer provided on the substrate on the side facing the electrolyte solution layer.

14. The dye-sensitized photoelectric conversion device defined in claim 12 or 13, wherein an anti-reflection layer is formed on a surface of the substrate of the photoelectrode layer or the counter electrode layer, said surface being opposite to the side facing the electrolyte solution layer.

15. The dye-sensitized photoelectric conversion device defined in claim 1, wherein the device is packaged in a wrapping bag made of a transparent plastic film.
